# EUROPEAN PATENT SPECIFICATION

(11) **EP 1 027 984 B1**
(45) Date of publication and mention of the grant of the patent: **10.11.2004**
(21) Application number: 00102690.5
(22) Date of filing: 09.02.2000
(51) Int. Cl.: B31B 47/02, B29C 65/74

(54) **Device for forming pouches, bags and the like**
Vorrichtung zum Herstellen von Beuteln, Säcken und dergleichen
Dispositif pour produire des sachets d'emballage, sacs et similaires

(30) Priority: 12.02.1999 IT VI990013 U
(43) Date of publication of application: 16.08.2000
(73) Proprietor: S.I.R.I. S.R.L., 36034 S.Tomio di Malo (VI) (IT)
(72) Inventor: Idelbo, Tardelli, 36016 Thiene (VI) (IT)

(56) References cited:
- DE-U- 8 515 349
- FR-A- 2 322 709
- GB-A- 746 361
- US-A- 2 707 985
- US-A- 4 025 383
- US-A- 4 156 382

## Description

The present invention relates to a device for forming pouches, bags and the like, particularly but not exclusively useful in the medical field and especially in the field of dentistry for preparing made-to-measure flexible containers suitable for hygienically preserving instruments such as scalpels, spatulas, et cetera.

Conventional devices, better known commercially by the generic name of thermosealers, are constituted by a frame, adapted to be fixed to a wall or to the surface of a table, which supports, in the rear part, a rod for rolls of tubular ribbon for forming pouches and, in the front part, a contoured housing which accommodates a cutting means and a heat-sealing means arranged at right angles to the feed direction of the ribbon inside the housing. In summary, the heat-sealing means includes a bar-shaped electric resistor which is accommodated in a support which is elastically connected to the frame by its ends and can be coupled, by virtue of the approach of the support and along its entire length, to an overlying profile. In detail, this approach is performed by virtue of two small profiles at the ends of the support, which cooperate with two cams provided on a rod which protrudes laterally from the housing in order to support an actuation level. In turn, the cutting means is arranged to the rear and in a parallel arrangement approximately on the same plane as the heat-sealing means and consists of a chisel-like blade which is fixed on a handle which can slide along a guide from one side of the housing to the other. The blade has a cutting edge which is directed downward, so as to abut against a lateral edge which protrudes from the overlying profile. Accordingly, once the handle has been moved to the end of the guide and once the roll of the appropriate size for the instruments to be packaged has been placed on the appropriately provided rod, the leading edge of the roll is inserted in the housing above the abutment edge of the blade and between the resistor and the overlying profile; then, after pulling out the necessary portion thereof, the lever is lowered from the inactive position, so that the mating between the resistor and the profile forms a uniform heat-sealing band from one side of the ribbon to the other; then, by guiding the handle to the other end of the housing, the pouch thus formed is separated from the rest of the roll. In order to provide the heat-seal on the fourth side of the pouch it is sufficient to insert the corresponding flaps from the front of the housing between the resistor and the overlying profile and then repeat the above operations, with the exception of the cut.

The main drawback of these devices is the fact that heat-sealing and cutting are separate operations, inherently entailing substantial constructive complexity and awkward use. The mating of the resistor with the overlying profile is in fact achieved by virtue of cam mechanisms which often have jamming problems or malfunctions in general. Furthermore, the completion of the heat-seal cannot be perceived directly by the operator by operating the lever and therefore it is necessary to provide, inside the housing, a warning means such as acoustic alarms or flashing LEDs. Finally, the actuation of the heat-sealing means by virtue of the lever and then, once heat-sealing has been completed, of the cutting means by means of the handle is particularly disadvantageous and causes idle times, especially if there is a large number of instruments to be packaged.

Another device for forming bags is known from FR-A-2 322 709. This device comprises a supporting frame for at least one roll of tubular ribbon, for a means for cutting said tubular ribbon and for a means for heat-sealing it to form a bag from the remainder of the ribbon. The cutting means comprises a reciprocating means sliding from one side of the ribbon to the other which acts on cutting edges. The displacement of said reciprocating means allows to perform the cutting action of a bag from the ribbon. The heat-sealing means are conventional.

In this device the cutting and the heat-sealing means are independent means as in the conventional devices. This fact involves an high degree of mechanical complexity and, consequently, high manufacturing and maintenance costs. This fact involves also several drawbacks during the use. The first one is that two separate actions, respectively a first action of heat-sealing by means of the heat-sealing means and a second action of cutting by means of the cutting means, are necessary to form a bag from a tubular ribbon. The second one is that the heat-sealing means provided in this device can potentially cause bums and crushing the user's hand fingers.

An aim of the present invention is overcome the drawbacks of the cited prior art.

An important object of the invention is to provide a device for forming pouches, bags and the like which allows, by virtue of a single movement, to produce a heat-seal of excellent quality and to cut the resulting pouch from the remainder of the ribbon.

A further object of the invention is to provide a device which is constructively simple with low manufacturing cost, so that the final cost is significantly lower than that of conventional heat-sealing devices.

Another object of the invention is to provide a device which is reliable, so that maintenance is limited to cases of improper use, and is furthermore aesthetically pleasant so that it can even be installed in sight in surgeries.

Another object of the invention is to provide a device which can be adapted to the various commercially available ribbon sizes and is self-evident to use both during the preparatory steps for loading the roll and during the formation of the pouches.

This aim, these objects and others which will become apparent hereinafter are achieved by a device for forming pouches, bags and the like according to the appended claim 1.

Further characteristics and advantages of the invention will become apparent from the following detailed description of an embodiment thereof, illustrated only by way of non-limitative example in the accompanying drawings, wherein:
Figure 1 is a perspective view of the device according to the invention;
Figure 2 is a sectional view, taken along a longitudinal plane, of a portion of the device of Figure 1;
Figure 3 is an exploded view of a detail of the device of Figure 1;
Figure 4 is a perspective view of a detail of the device of Figure 1.

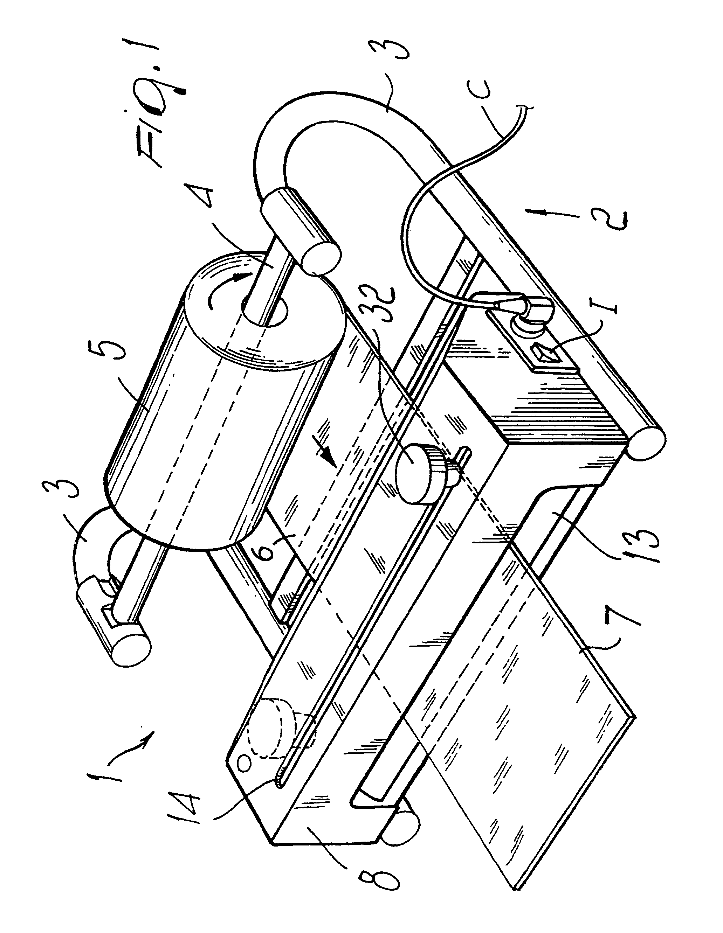

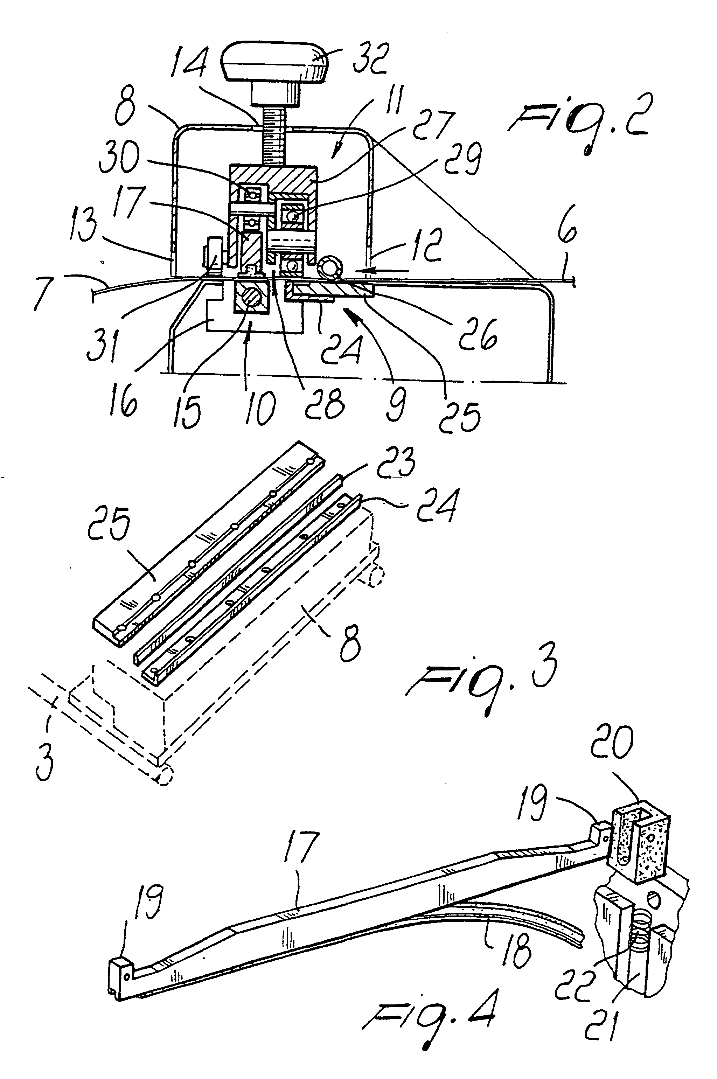

With reference to the accompanying figures, the device, generally designated by the reference numeral 1, comprises a frame 2 made of tubes 3 of the per se known type, with a rod 4 which supports one or more side-by-side rolls 5 of tubular ribbon 6 made of a material suitable to produce sterile storage pouches 7 and a casing 8 which substantially lies across the frame 2 at right angles to the direction of advancement of the ribbon 6. The casing 8 internally accommodates a cutting means 9 and immediately thereafter, along the direction of advancement of the ribbon 6, a heat-sealing means 10, both of which are arranged at right angles to the advancement of the ribbon 6, and a reciprocating means 11. The casing 8 is provided with three parallel elongated longitudinal slits 12, 13 and 14 which are perpendicular to the direction of feed of the ribbon 6: the first slit 12 is provided on the face that is directed toward the roll 5, to allow manual insertion of the leading edge of the ribbon 6 into the casing 8; the second slit 13 is provided on the face that lies opposite the preceding one, to allow extraction of the pouches 7. The third slit 14 is provided on the top surface of the casing 8 in order to accommodate a means for the manual actuation of the reciprocating means 11. In detail, the heat-sealing means 10 comprises a straight electric resistor 15, for example a metallic profiled member having an approximately square cross-section, which runs from one side of the casing 8 to the other and is suspended from insulating supports 16 which are in turn anchored to the casing 8, and a mating profile 17 which can move by virtue of the actuation of the reciprocating means 11 from an overlying position, which is spaced from the resistor 15, to a means 11 from an overlying position, which is spaced from the resistor 15, to a position in which it mates with the resistor. The mating profile 17 is a metallic segment which is also straight and includes a straight member 18, made of silicone, which faces the resistor 15, with a raised central portion and with short end tabs 19 which are perpendicular to the extension of the profile 17 and are accommodated and locked within sliding members 20 which are in turn inserted in slots 21 formed in the lateral walls of the casing 8 and rest on elastic members 22, for example spiral springs, which are arranged in the lower portion of the slots 21. The cutting means 9 comprises a straight laminar profile 23 which is at least equal in length to the resistor 15 and is arranged at its level with at least one sharp edge which is laterally retained between two supports 24 and 25 which are in turn fixed to the casing 8. The combined action of the laminar profile 23 and of the reciprocating means 11 separates the formed pouch 7 from the rest of the roll 5. Conveniently, in front of the cutting means 9 in the direction of feed of the ribbon 6 there is a tubular member 26 which can rotate axially, abuts against the upper face of the support 25 and acts both as a ribbon guide and as a retainer for the leading edge of the ribbon 6 when the pouch 7 is separated. In turn, the reciprocating means 11 consists of a carriage 27 which can slide so as to straddle the cutting means 9 and the heat-sealing means 10 and forms a compartment 28 which is open toward them and respectively accommodates a first rolling bearing 29, which presses along the sharp edge of the laminar profile 23, and a second rolling bearing 30, which in turn presses along the mating profile 17, causing it to mate with the resistor 15. The carriage 27 can be moved manually, for example by means of a knob 32, which protrudes from the slit 14 and is provided with a lateral supporting wheel 31.

The operation of the device is described hereinafter with reference to the accompanying figures.

First of all, the frame 2 is used to fix the device 1 to a wall or to the surface of a table. A roll 5 of tubular ribbon 6 for forming pouches 7 is placed on the roll supporting rod 4 and then, while the reciprocating means 11 is arranged at one end of the casing 8 or the other, the leading edge of the ribbon 6 is inserted in the casing 8 through the slit 12 between the upper face of the support 25 and the tubular member 26, above the laminar profile 23 and between the resistor 15 and the mating profile 17. In order to form a pouch 7, after connecting the device 1 by virtue of the power cord C to a power outlet and switching it on by means of the switch I in order to heat the resistor 15, it is sufficient to pull out, through the slit 13, the flap that is already inserted and accordingly draw out a portion of ribbon 6 having the chosen length and then move the reciprocating means 11 to the opposite end by acting on the knob 32. In detail, during the stroke of the carriage 27 from right to left or vice versa, the first bearing 29 and the second bearing 30 press respectively but simultaneously on the sharp edge of the laminar profile 23, causing the separation of the pouch 7 being formed from the rest of the ribbon 6, and on the mating profile 17, which by mating with the resistor 15 heat-seals the portion of ribbon 6 along its width. It is then easy to seal the pouch 7 on all four sides by reinserting the flaps to be heat-sealed between the resistor 15 and the mating profile 17 until they abut against the laminar profile 23 and then moving the reciprocating means 11 to the other end. Once this operation has been completed, the device 1 is ready to form another pouch 7.

In practice it has been observed that the device thus described achieves the intended aim and objects, since it provides, with a single movement, both the heat-sealing for forming a pouch and the cutting action for separating the pouch from the rest of the ribbon. Furthermore, by using components which are commonly commercially available, such as the rolling bearings, the device is simple to manufacture and therefore can be manufactured at a low cost. The device is extremely practical and cheap to use, since cutting and heat-sealing occur simply by acting on the reciprocating means in either direction.

In practice, the materials used, as well as the dimensions, may be any according to requirements.

## Claims

1. A device for forming pouches, bags and the like comprising a supporting frame (2) for at least one roll (5) of tubular ribbon (6), a means for cutting (9) said tubular ribbon (6) and a means for heat-sealing (10) it, **characterized in that** it comprises at least one reciprocating means (11) which is adapted to run from one side of said ribbon to the other acting at the same time both on said cutting means (9) and on said heat-sealing means (10) so that the displacement of said reciprocating means (11) allows to make a cutting and at the same time a heat-sealing from one side of said ribbon (6) to the other forming a pouch or a bag from said ribbon (6).

2. The device, according to claim 1, **characterized in that** it comprises a casing (8) for accommodating said cutting means (9) , said heat-sealing means (10) and said reciprocating means (11) said casing (8) being rigidly coupled to said frame (2) and being arranged at right angles to the feed direction of said ribbon (6), said casing (8) being provided with at least three elongated and parallel slits (12, 13, 14) which are perpendicular to the feed direction of said ribbon (6), the first one of said slits (12) being suitable for inserting said ribbon (6) into said casing (8), the second one of said slits (13) being adapted to extract said pouches (7) and the third one of said slits (14) being adapted to accommodate a means for actuating said reciprocating means (11).

3. The device, according to claim 2, **characterized in that** said cutting means (9) and said heat-sealing means (10) are arranged at right angles to feed direction of said ribbon (6), said cutting means (9) being arranged ahead of said heat-sealing means (10) in the same direction.

4. The device, according to claim 1, **characterized in that** said heat-sealing means (10) comprises an electric resistor (15) and a profile for mating (17) with said resistor (15) which can be moved by actuating said reciprocating means (11) from a spaced position which lies above said resistor (15) to a position in which mating whit said resistor (15) occurs.

5. The device, according to claim 4, **characterized in that** said mating profile (17) comprises end tabs (19) which are accommodated in guided sliding members (20) which rest on elastically deformable members (22), a raised central portion and a straight silicone member (18).

6. The device, according to claim 1, **characterized in that** said cutting means (9) comprises a laminar profile (23) with at least one sharp edge which is retained laterally between two supports (24, 25).

7. The device, according to claim 1, **characterized in that** said reciprocating means (11) comprises at least one carriage (27) which can slide so as to straddle said cutting means (9) and said heat-sealing means (10), said carriage (27) forming a compartment (28) which is open toward said cutting means (9) and said heat-sealing means (10) in order to accommodate a first rolling bearing (29) and a second rolling bearing (30) which act respectively on said cutting means (9) and said heat-sealing means (10).

8. The device, according to one or more of the preceding claims, **characterized in that** said means for actuating said reciprocating means (11) comprises a knob (32) which is rigidly coupled to said carriage (27) and protrudes from said third slit (14).

9. The device, according to one or more of the preceding claims, **characterized in that** said reciprocating means (11) comprises at least one wheel for laterally supporting said carriage (27).

10. The device, according to one or more of the preceding claims, **characterized in that** it comprises a rotatable tubular member (26) which is arranged in front of said cutting means (9) in the direction of feed of said ribbon (6), said member abutting against one of said supports (25) of said cutting means (9) in order to guide and retain the ribbon (6) inside said casing (8).

## Patentansprüche

1. Vorrichtung zur Bildung von Beuteln, Taschen und dgl., enthaltend einen Tragrahmen (2) für wenigstens eine Rolle (5) eines schlauchförmigen Bandes (6), eine Einrichtung zum Schneiden (9) des schlauchförmigen Bandes (6) und eine Einrichtung zum HeiBverschweißen (10) des Bandes (6), **dadurch gekennzeichnet, daß** sie wenigstens eine hin- und herbewegbare Einrichtung (11) enthält, die dazu angepaßt ist, von einer Seite des Bandes zur anderen zu laufen und zur gleichen Zeit sowohl auf die Einrichtung zum Schneiden (9) als auch auf die Einrichtung zum Heißverschweißen (10) zu wirken, so daß die Verschiebung der hin- und herbewegbaren Einrichtung (11) ein Schneiden und gleichzeitig ein Heißverschweißen von einer Seite des Bandes (6) zu der anderen zuläßt, um einen Beutel oder eine Tasche aus dem Band (6) zu bilden.

2. Vorrichtung nach Anspruch 1, **dadurch gekennzeichnet, daß** sie ein Gehäuse (8) zur Aufnahme der Einrichtung zum Schneiden (9), der Einrichtung zum Heißverschweißen (10) und der hin- und herbewegbaren Einrichtung (11) enthält, wobei das Gehäuse (8) fest an dem Rahmen (2) angebracht und mit rechten Winkeln zur Zufuhrrichtung des Bandes (6) angeordnet ist, wobei das Gehäuse (8) mit wenigstens drei parallel zueinander und senkrecht zur Zufuhrrichtung des Bandes (6) angeordneten Längsschlitzen (12, 13, 14) versehen ist, von denen der erste (12) zum Einsetzen des Bandes (6) in das Gehäuse (8), der zweite (13) zum Herausziehen der Beutel (7) und der dritte (14) zur Aufnahme eines Mittels zur Betätigung der hin- und herbewegbaren Einrichtung (11) angepaßt ist.

3. Vorrichtung nach Anspruch 2, **dadurch gekennzeichnet, daß** die Einrichtung zum Schneiden (9) und die Einrichtung zum Heißverschweißen (10) rechtwinkelig zur Zufuhrrichtung des Bandes (6) angeordnet sind und die Einrichtung zum Schneiden (9) in der gleichen Richtung vor der Einrichtung zum Heißverschweißen (10) angeordnet ist.

4. Vorrichtung nach Anspruch 1, **dadurch gekennzeichnet, daß** die Einrichtung zum Heißverschweißen (10) einen elektrischen Widerstand (15) und ein mit dem Widerstand (15) zusammenwirkendes Profil (17) enthält, das durch eine Betätigung der hin- und herbewegbaren Einrichtung (11) von einer oberhalb des Widerstands liegenden, be-abstandeten Position zu einer Position bewegt werden kann, in welcher es mit dem Widerstand (15) zusammenwirkt.

5. Vorrichtung nach Anspruch 4, **dadurch gekennzeichnet, daß** das mit dem Widerstand (15) zusammenwirkende Profil (17) Endlappen (19), die in auf elastisch deformierbaren Elementen (22) ruhenden Gleitführungselementen (20) aufgenommen sind, einen erhabenen mittleren Abschnitt und ein gerades Silikonelement (18) enthält.

6. Vorrichtung nach Anspruch 1, **dadurch gekennzeichnet, daß** die Einrichtung zum Schneiden (9) ein lamellenförmiges Profil (23) mit wenigstens einer, zwischen zwei Halterungen (24, 25) seitlich gehaltenen scharfen Kante enthält.

7. Vorrichtung nach Anspruch 1, **dadurch gekennzeichnet, daß** die hin- und herbewegbare Einrichtung (11) wenigstens einen Schlitten (27) enthält, der kann, um sich auf die Einrichtung zum Schneiden (9) und die Einrichtung zum Heißverschweißen (10) aufzusetzen, wobei der Schlitten (27) einen zu der Einrichtung zum Schneiden (9) und zu der Einrichtung zum Heißverschweißen (10) offenen Raum (28) bildet, um ein erstes und eine zweites Wälzlager (29, 30) aufzunehmen, die auf die Einrichtung zum Schneiden (9) beziehungsweise auf die Einrichtung zum Heißverschweißen (10) wirken.

8. Vorrichtung nach einem oder mehreren der vorangehenden Ansprüche, **dadurch gekennzeichnet, daß** das Mittel zur Betätigung der hin- und herbewegbaren Einrichtung (11) einen Knopf (32) enthält, der fest an dem Schlitten (27) angebracht ist und aus dem dritten Schlitz (14) hervorragt.

9. Vorrichtung nach einem oder mehreren der vorangehenden Ansprüche, **dadurch gekennzeichnet, daß** die hin- und herbewegbare Einrichtung (11) wenigstens ein Rad zum seitlichen Stützen des Schlittens (27) enthält.

10. Vorrichtung nach einem oder mehreren der vorangehenden Ansprüche, **dadurch gekennzeichnet, daß** sie ein drehbares, röhrenförmiges Element (26) enthält, das in der Zufuhrrichtung des Bandes (6) vor der Einrichtung zum Schneiden (9) angeordnet ist, wobei das Element (26) gegen eine (25) der Halterungen der Einrichtung zum Schneiden (9) stößt, um das Band (6) in dem Gehäuse (8) zu halten und zu führen.

## Revendications

1. Dispositif permettant de former des poches, sachets et similaires, comprenant un bâti de support (2) pour au moins un rouleau (5) de ruban tubulaire (6), un moyen de découpe (9) dudit ruban tubulaire (6) et un moyen de thermosoudage (10) de celui-ci, **caractérisé en ce qu'**il comprend au moins un moyen de mouvement alternatif (11) qui est adapté pour évoluer d'un côté dudit ruban à l'autre, en agissant en même temps à la fois sur ledit moyen de découpe (9) et sur ledit moyen de thermosoudage (10), de telle sorte que le déplacement dudit moyen de mouvement alternatif (11) permet d'effectuer une découpe et, en même temps, un thermosoudage, d'un côté dudit ruban (6) à l'autre, en formant une poche, ou un sachet, à partir dudit ruban (6).

2. Dispositif selon la revendication 1, **caractérisé en ce qu'**il comprend un boîtier (8) permettant de loger ledit moyen de découpe (9), ledit moyen de thermosoudage (10) et ledit moyen de mouvement alternatif (11), ledit boîtier (8) étant couplé, de manière rigide, audit bâti (2), et étant agencé à angle droit par rapport à la direction de l'avance dudit ruban (6), ledit boîtier (8) étant muni d'au moins trois fentes allongées et parallèles (12, 13, 14), qui sont perpendiculaires à la direction de l'avance dudit ruban (6), la première desdites fentes (12) convenant pour insérer ledit ruban (6) dans ledit boîtier (8), la deuxième desdites fentes (13) étant adaptée pour extraire lesdites poches (7) et la troisième desdites fentes (14) étant adaptée pour loger un moyen permettant d'actionner ledit moyen de mouvement alternatif (11).

3. Dispositif selon la revendication 2, **caractérisé en ce que** ledit moyen de découpe (9) et ledit moyen de thermosoudage (10) sont agencés à angle droit par rapport à la direction de l'avance dudit ruban (6), ledit moyen de découpe (9) étant agencé en amont dudit moyen de thermosoudage (10), dans la même direction.

4. Dispositif selon la revendication 1, **caractérisé en ce que** ledit moyen de thermosoudage (10) comprend une résistance électrique (15) et un profil permettant de s'apparier (17) avec ladite résistance (15) qui peut être déplacée en actionnant ledit moyen de mouvement alternatif (11) entre une position espacée qui se situe au-dessus de ladite résistance (15) et une position dans laquelle elle s'apparie avec ladite résistance (15).

5. Dispositif selon la revendication 4, **caractérisé en ce que** ledit profil d'appariement (17) comprend des languettes d'extrémité (19), qui sont logées dans des éléments coulissants guidés (20) qui reposent sur des éléments déformables élastiquement (22), une partie centrale surélevée et un élément droit en silicone (18).

6. Dispositif selon la revendication 1, **caractérisé en ce que** ledit moyen de découpe (9) comprend un profil laminaire (23) muni d'au moins un bord acéré, qui est retenu latéralement entre deux supports (24, 25).

7. Dispositif selon la revendication 1, **caractérisé en ce que** ledit moyen de mouvement alternatif (11) comprend au moins un chariot (27) qui peut coulisser de façon à enjamber ledit moyen de découpe (9), et ledit moyen de thermosoudage (10), ledit chariot (27) formant un compartiment (28) qui est ouvert vers ledit moyen de découpe (9) et ledit moyen de thermosoudage (10), afin de loger un premier palier à roulement (29) et un second palier à roulement (30), qui agissent respectivement sur ledit moyen de découpe (9) et ledit moyen de thermosoudage (10).

8. Dispositif selon une ou plusieurs des revendications précédentes, **caractérisé en ce que** ledit moyen permettant d'actionner ledit moyen de mouvement alternatif (11) comprend un bouton (32) qui est couplé, de manière rigide, audit chariot (27) et fait saillie à partir de ladite troisième fente (14).

9. Dispositif selon une ou plusieurs des revendications précédentes, **caractérisé en ce que** ledit moyen de mouvement alternatif (11) comprend au moins une roue, afin de supporter latéralement ledit chariot (27).

10. Dispositif selon une ou plusieurs des revendications précédentes, **caractérisé en ce qu'**il comprend un élément tubulaire rotatif (26) qui est agencé en face dudit moyen de découpe (9), dans la direction de l'avance dudit ruban (6), ledit élément butant contre l'un desdits supports (25) dudit moyen de découpe (9), afin de guider et de retenir le ruban (6) à l'intérieur dudit boîtier (8).
